# EUROPÄISCHE PATENTSCHRIFT

(11) **EP 2 466 172 B1**
(45) Veröffentlichungstag und Bekanntmachung des Hinweises auf die Patenterteilung: **08.02.2017**
(21) Anmeldenummer: 10015718.9
(22) Anmeldetag: 16.12.2010
(51) Int. Cl.: F16J 15/32

(54) **Dichtring**
Gasket
Bague d'étanchéité

(43) Veröffentlichungstag der Anmeldung: 20.06.2012
(73) Patentinhaber: Carl Freudenberg KG, 69469 Weinheim (DE)
(72) Erfinder: Drucktenhengst, Rolf, 68623 Lampertheim (DE); Eping, Udo, 64297 Darmstadt (DE)

(56) Entgegenhaltungen:
- EP-A2- 0 843 114
- WO-A1-2005/116492
- DE-A1- 4 443 442
- DE-B- 1 007 130

## Beschreibung

### Technisches Gebiet

Die vorliegende Erfindung befasst sich mit einer Dichtungsanordnung, insbesondere mit der Abdichtung von Gehäuseöffnungen, die von einer Welle durchsetzt werden, mittels Dichtringen, wobei die Dichtringe einen jeweils zumindest teilweise die Welle umgebenden Innenraum von einem Außenraum abtrennen. Dabei kann der Innenraum ein Gehäuseinnenraum sein, der von einem Dichtring gegenüber einem das Gehäuse umgebenden Außenraum ggf. druckdicht abgetrennt wird, sodass weder Flüssigkeiten, Gase und/oder Aerosole aus dem Gehäuseinnenraum austreten können, noch ein Eintrag von Material aus dem Außenraum in den Gehäuseinnenraum stattfinden kann. Demzufolge betrifft die Erfindung auch Gehäuse mit einem derartigen Dichtring.

### Stand der Technik

Dichtungsanordnungen mit Dichtringen sind allgemein bekannt.

Aus der DE 10 07 130 B ist ein Radialwellendichtring zum dichtenden Abtrennen eines eine Welle jeweils zumindest teilweise umgebenden Innenraums von einem Außenraum mit einer durch eine erste und eine zweite Kegelstumpfmantelfläche begrenzten Dichtlippe bekannt, die außenumfangsseitig von einer Ringwendelfeder umschlossen ist, mit der die Dichtlippe in Einbaulage an die Welle anpressbar ist, wobei in einer axialen
Richtung die erste Kegelstumpfmantelfläche zum Außenraum und die zweite Kegelstumpfmantelfläche zum Innenraum hin orientiert ist, wobei die Kegelstumpfmantelflächen in Einbaulage über eine an der Welle anliegende, ringförmige Kontaktfläche der Dichtlippe miteinander verbunden sind.
Die Aufgabe, die durch den vorbekannten Dichtring gelöst werden soll, wird darin gesehen, dass Zugspannungen im Material, aus dem der vorbekannte Dichtring besteht, vermieden werden sollen, weil sich durch die Zugspannungen Risse in der Lauffläche bilden können, wodurch die Dichtung unbrauchbar wird.

Zur Lösung dieser Aufgabe ist es vorgesehen, dass der Dichtring nach Überstreifen auf die Welle zugspannungslos ist. Das wird dadurch erreicht, dass der Innendurchmesser der nicht-federbelasteten Dichtlippe im nicht-eingebauten Zustand gleich dem Wellendurchmesser der abzudichtenden Welle oder etwas größer gewählt wird. Die Kontaktfläche des Dichtrings weist, bezogen auf die Oberfläche der abzudichtenden Welle, deshalb keine Überdeckung auf. Die Anpressung der Dichtlippe an die Wellenoberfläche erfolgt nur durch die Ringwendelfeder, so dass die Reibung herabgesetzt und das Auftreten von Rissen in der Lauffläche der Dichtlippe verhindert wird.
Der Neigungswinkel der zweiten Kegelstumpfmantelfläche, die zum Innenraum hin orientiert ist, beträgt bei dem vorbekannten Dichtring 45 bis 60°, bezogen auf die Oberfläche der abzudichtenden Welle. Die erste Kegelstumpfmantelfläche, die auf der Umgebungsseite angeordnet ist, schließt mit der Oberfläche der abzudichtenden Welle demgegenüber einen wesentlich kleineren Winkel von 15 bis 20 ° ein.

Ein weiterer Dichtring ist aus der EP 0 843 114 A2 bekannt. Die zweite Kegelstumpfmantelfläche, die zum Innenraum hin orientiert ist, begrenzt mit der Welle in Einbaulage einen zweiten Winkel, der etwa dreimal so groß ist wie der erste Winkel, den die erste Kegelstumpfmantelfläche mit der Welle in Einbaulage ein schließt. Die Kontaktfläche der Dichtlippe weist im unverbauten Zustand des Dichtrings eine Überdeckung bezogen auf die Oberfläche der abzudichtenden Welle auf, und die Dichtlippe ist außenumfangsseitig von einer Ringwendelfeder umschlossen, mit der die Dichtlippe in Einbaulage an die Welle anpressbar ist.

Ein weiterer Dichtring ist aus der WO 2005/116492 A1 bekannt. Der Dichtring weist zwei Dichtlippen auf, die zur Welle und zum abzudichtenden Innenraum gerichtet hintereinander liegend angeordnet sind, wobei die Überdeckung der innenliegenden primären Dichtlippe größer als die Überdeckung der außenliegenden sekundären Dichtlippe ist. Beide Dichtlippen werden ausschließlich durch den Druck im abzudichtenden Raum an die Oberfläche der abzudichtenden Welle angedrückt; eine Ringwendelfeder weist der vorbekannte Dichtring nicht auf.
Die zweiten Kegelstumpfmantelflächen der Dichtlippen, die zum Innenraum hin orientiert sind, schließen mit der Oberfläche der abzudichtenden Welle jeweils einen wesentlich größeren Winkel ein als die ersten Kegelstumpfmantelflächen, die zum Außenraum hin orientiert sind.

Aus der EP 1 156 242 B1 ist ein als Radialwellendichtring ausgebildeter Dichtring bekannt, der aus einem ringförmigen, metallenen, Stützkörper und einer daran angebundenen Dichtlippe aufgebaut ist. Der Radialwellendichtring wird in Einbaulage von einer Welle durchsetzt, wobei die Dichtlippe eine, insbesondere unter Druck stehende, Hydraulikseite bzw. einen Innenraum oder Gehäuseinnenraum von einer Atmosphärenseite bzw. einem Außenraum dichtend abtrennt. Des Weiteren wird die Dichtlippe mittels einer Ringwendelfeder an die Welle angepresst und zudem kann eine zur Atmosphärenseite hin orientierte, zusätzliche Dichtlippe möglichen Schmutzeintrag in Richtung der Hydraulikseite und somit in Richtung des Gehäuseinnenraums weiter verringern. Im Wesentlichen wird die Dichtlippe durch zwei Kegelstumpfmantelflächen ausgebildet, wobei die erste Kegelstumpfmantelfläche zur Atmosphärenseite bzw. zum Außenraum hin orientiert ist und die zweite Kegelstumpfmantelfläche zur Hydraulikseite bzw. Innenraum. Die erste Kegelstumpfmantetfläche weist einen Knick auf, sodass in unverbautem Zustand des Dichtringes ein Winkel α zwischen der axialen Richtung und der ersten Kegelstumpfmantelfläche im Bereich der Kontaktfläche der Dichtlippe an die Welle von 35 - 65°, vorzugsweise von 45 - 60° ausgebildet werden kann. Der Winkel β der zweiten Kegelstumpfmantelfläche zur axialen Richtung beträgt in unverbautem Zustand 15 - 30°, vorzugweise 17 - 22°. In Einbaulage des Dichtringes mit der Welle sind die Winkel α und β etwa gleich groß und weisen dann Werte zwischen 20 und 50°, vorzugsweise 30° auf. Diese Änderung der Winkel α, β des unverbauten Zustandes gegenüber der Einbaulage ist auf eine Überdeckung zurückzuführen, aufgrund der bei Einfuhr der Welle in den Dichtring zum einen eben diese Winkeländerung eintritt und zum anderen der Umfang der Dichtlippe bei der Montage der Welle elastisch aufgeweitet wird.

In der DE 24 58 773 A1 ist eine Dichtung, insbesondere für drehende Wellen beschrieben, die aus einem metallischen, ringförmigen Stützkörper besteht, an dem eine Dichtlippe angebunden ist. Zur Vermeidung von einem Einknicken aufgrund der Druckbelastung durch den im Gehäuseinnenraum auftretenden Druck ist die zum Außenraum hin orientierte, die Dichtlippe begrenzende Fläche knickfrei ausgebildet. Zudem würden Diskontinuitäten bei eben dieser die Dichtlippe begrenzenden zum Außenraum hin orientierten Fläche beim Einbau der Welle möglicherweise zu einem Umklappen bzw. Abklappend der Dichtlippe führen. Dies kann eben durch diese knickfreie Ausbildung bzw. Ausbildung ohne Diskontinuität verringert bzw. verhindert werden. Dabei beträgt der Winkel zwischen dieser die Dichtlippe begrenzenden Fläche im Bereich der Kontaktfläche der Dichtlippe an der Welle - vor dem Einbau der Welle - mindestens 35°. Aufgrund der Überdeckung kann dabei dieser Winkel in Einbaulage der Dichtung mit der Welle geringer ausfallen. Zudem kann aufgrund eines eventuell in dem Gehäuseinnenraum auftretenden relativen Überdrucks der Wert für diesen Winkel weiter verringert werden.

Dichtringe, deren Dichtlippen von einander durchschneidenden Kegelflächen, also durch Kegelstumpfmantetflächen, begrenzt sind, werden somit üblicherweise als Dichtungen im Bereich von Gehäuseöffnungen eingesetzt, in denen die Gehäuse von einer Welle durchsetzt sind. Üblicherweise weist die Lippe des Dichtringes bezogen auf die abzudichtende Fläche bzw. bezogen auf die in den Dichtring einzusetzende Welle eine radiale Überdeckung auf, sodass beim Einsetzen der Welle in den Dichtring die Dichtlippe radial vorgespannt und aufgeweitet wird. Aufgrund der radialen Vorspannung umschließt die Dichtlippe die abzudichtende Fläche bzw. Welle dichtend. Bei großen Innendurchmessem > 20 mm der sich ausbildenden ringförmigen Kontaktfläche der Dichtlippe an der Welle hat die voreingestellte Überdeckung der Dichtlippe zur abzudichtenden Oberfläche der Welle nahezu keinen Einfluss auf die axiale Breite der Kontaktfläche. Das ist darauf zurückzuführen, dass sich Dichtringe mit großen Durchmessern und damit verbundenen großen Dichtlippen-Umfangslängen bei ihrer Montage auf die Welle problemlos um den Betrag der Überdeckung aufweiten lassen, ohne dass das einen ungünstigen Einfluss auf die radiale Anpresskraft der Dichtlippe auf die abzudichtende Oberfläche und somit auf die axiale Breite der Kontaktfläche hätte. Je kleiner jedoch die Wellendurchmesser und somit auch die Innendurchmesser der ringförmigen Kontaktflächen der Dichtringe werden, desto geringer fällt die mögliche Aufdehnung der Dichtlippe über den Umfang aus. Demzufolge kann mit abnehmendem Wellenradius bzw. Innendurchmesser der Kontaktfläche der Dichtlippe an der Welle eine Verbreiterung eben dieser Kontaktfläche durch eine unerwünscht hohe Verformung und Anpresskraft der Dichtlippe an der abzudichtenden Oberfläche eintreten. Eine Verbreiterung der Kontaktfläche verursacht jedoch einen höheren Verschleiß der Dichtlippe sowie ein verschlechtertes, undifferenzierteres Dichtverhalten. Ist zudem die Kontaktfläche verstärkt zum Außenraum bzw. zur Atmosphärenseite hin verschoben, so können, insbesondere im Start-Stopp-Betrieb, in der Dichtlippe vermehrt Scharten oder Einkerbungen vor allem bei nicht ausreichender Schmierung ausgebildet werden. Dadurch können sich Leckagen im Bereich der Dichtlippe ausbilden.

### Darstellung der Erfindung

Der Erfindung liegt die Aufgabe zu Grunde, eine Dichtungsanordnung mit einem verbesserten Dichtring bzw. ein verbessertes Gehäuse mit einem solchen Dichtring zu zeigen, wobei der Dichtring gute Gebrauchseigenschaften während einer langen Gebrauchsdauer durch nur eine geringe axiale Breite der Kontaktfläche zwischen Dichtring und Oberfläche der abzudichtenden Welle aufweisen soll, auch dann, wenn er nur einen geringen Durchmesser hat.

Erfindungsgemäß wird diese Aufgabe durch die Gegenstände der unabhängigen Ansprüche gelöst. Vorteilhafte Ausführungsformen sind Gegenstand der abhängigen Ansprüche.

Zur Lösung der Aufgabe ist eine Dichtungsanordnung, umfassend einen Dichtring vorgesehen, insbesondere ein Radialwellendichtring, zum dichtenden Abtrennen eines eine Welle jeweils zumindest teilweise umgebenden Innenraums von einem Außenraum mit einer durch eine erste und eine zweite Kegelstumpfmantelfläche begrenzten Dichtlippe, die außenumfangsseitig von einem Spannelement umschlossen ist,
mit dem die Dichtlippe in Einbaulage an die Welle anpressbar ist, wobei in einer axialen Richtung die erste Kegelstumpfmantelfläche zum Außenraum und die zweite Kegelstumpfmantelfläche zum Innenraum hin orientiert ist, wobei die Kegelstumpfmantelflächen in Einbaulage über eine an der Welle anliegende, ringförmige Kontaktfläche der Dichtlippe miteinander verbunden sind, wobei die Kontaktfläche im unverbauten Zustand des Dichtrings eine Überdeckung bezogen auf die Oberfläche der abzudichtenden Welle aufweist, wobei der erste und der zweite Winkel in Einbaulage im Wesentlichen gleich groß ausgebildet sind, wobei die erste Kegelstumpfmantelfläche mit der Welle in Einbaulage einen ersten Winkel von 23° bis 40° einschließt und wobei ein Innendurchmesser der an der Welle anliegenden, ringförmigen Kontaktfläche in Einbaulage 1 mm bis 15 mm beträgt, abhängig vom Durchmesser der jeweiligen abzudichtenden Welle

Vorteilhaft kann durch eine derartige Ausgestaltung der Dichtlippe trotz Überdeckung zur abzudichtenden Oberfläche eine geringe axiale Breite der Kontaktfläche in Einbaulage mit der Welle ausgebildet werden.

Eine Welle kann ein Gehäuse bzw. eine Gehäuseöffnung derartig durchsetzend angeordnet sein, dass die Welle sowohl von dem Gehäuseinnenraum, als auch von dem das Gehäuse umgebenden Außenraum umgegeben ist. In der Gehäuseöffnung, die durch die Welle durchsetzt wird, kann ein Dichtring zur bestimmungsgemäßen Abdichtung bzw. Abtrennung des Innenraums gegenüber dem Außenraum eingesetzt werden. Der Gehäuseinnenraum kann dabei Flüssigkeiten, Gase, Aerosole oder dergleichen aufweisen und unter einem gegenüber dem Außenraum erhöhten Druck stehen. Demzufolge verhindert der Dichtring ein Austreten der in dem Gehäuseinnenraum angeordneten Flüssigkeiten, Gase, Aerosole oder dergleichen. Weiterhin verhindert der Dichtring einen Materialeintrag von dem Außenraum in den Innenraum. Dadurch kann vorteilhaft eine Verschmutzung des Innenraums und
der darin angeordneten Flüssigkeiten, Gase, Aerosole oder dergleichen durch aus dem Außenraum stammenden Verschmutzungen verhindert werden.

Die Dichtlippe des Dichtringes, die im Wesentlichen in Einbaulage mit der Welle die Abtrennung des Außenraumes von dem Innenraum bewerkstelligt, wird durch zwei Kegelstufenmantelflächen begrenzt. In anderen Worten wird die Dichtlippe von einander durchschneidenden Kegelmantelflächen begrenzt. Im unverbauten Zustand und ggf. ohne Verschleißspuren können die Kegelstumpfmantelflächen der Dichtlippe über eine kreisförmige Kontaktkante miteinander verbunden sein. Wird nun die Welle eingeführt, so wird der Dichtring in die Einbaulage überführt und aufgrund einer Überdeckung wird die Dichtlippe derartig an die Welle angepresst, dass eine ringförmige Kontaktfläche an der Dichtlippe ausgebildet wird, mit der die Dichtlippe dann an der Welle anliegt. Dabei ist unter einer Überdeckung bzw. einer radialen Überdeckung eine Differenz zwischen dem Wellenradius und dem relativ kleineren Radius der Dichtlippe im unverbauten Zustand zu verstehen. Wird nun die Welle in den Dichtring eingeführt, so wird die Dichtlippe aufgrund eben dieser Überdeckung in Umfangsrichtung aufgeweitet und es entsteht die ringförmige Kontaktfläche mit der die Dichtlippe an der Welle anliegt. Dabei kann im unverbauten Zustand die Dichtlippe zwischen den beiden Kegelstumpfmantelflächen auch abgerundet ausgebildet sein. Unter der axialen Richtung ist die Richtung entlang der Welle in Einbaulage mit dem Dichtring zu verstehen.

Der Innendurchmesser der an der Welle anliegenden, ringförmigen Kontaktfläche und damit der Wellendurchmesser kann in Einbaulage 3 - 15 mm betragen.

Bei eben diesen kleinen Innendurchmessem bzw. Wellendurchmessem kann infolge der oben aufgeführten und nachfolgend beschriebenen Ausführungen des Dichtringes die gewünschte geringe axiale Breite der Kontaktfläche ausgebildet werden. Dadurch kann vor allem für diese kleinen Wellendurchmesser bzw. Innendurchmesser eine höhere Robustheit des Dichtringes sichergestellt werden. Zudem kann das Auftreten von Scharten oder Rissen in der Dichtlippe, vor allem bei unzureichender Schmierung, speziell im Start-Stopp-Betrieb, zumindest verringert werden. Zudem ist der Dichtring, insbesondere hinsichtlich seiner Dichtwirkung, vor allem gegenüber einer ggf. auftretenden Wellenexzentrizität und gegenüber Druck unempfindlicher.

Des Weiteren ist auf der radial abgewandten Seite der Dichtlippe ein ringförmiges Spannelement angeordnet, mit dem die Dichtlippe in Einbaulage an die Welle angepresst wird.

Ein derartiges Spannelement kann als Ringwendelfeder ausgebildet sein. Das Spannelement weist eine radiale Kraftwirkung auf. Das Spannelement kann als separates Bauteil zum Beispiel aus Metall ausgebildet sein oder integral mit der Dichtlippe aus einem elastischen Material ausgeformt sein. So ist es ebenfalls denkbar, dass das Spannelement aus einem gleichen oder ähnlichen Material wie die Dichtlippe und integral mit derselben ausgebildet ist.

Durch das Spannelement wird eine zusätzliche Anpresskraft erzeugt, mit der zusätzlich zu den anderen möglichen Kräften ebenfalls die Kontaktfläche gestaltet werden kann. So ist zum Beispiel durch eine Veränderung der Wirkebene der radialen Kraftwirkung des Spannelementes eine Veränderung der Lage sowie der Ausformung der Kontaktfläche möglich.

Dabei kann die Wirkebene der radialen Kraftwirkung des Spannelementes gegenüber einer Kontaktebene die Dichtlippe axial in Richtung des Außenraumes verschoben sein. Dies kann in Einbaulage und/oder im unverbauten Zustand des Dichtringes der Fall sein. Durch eine derartige Positionierung des Spannelementes kann auch eine höhere Robustheit vor allem gegenüber der Exzentrizität der Welle und einer dementsprechenden Druckbeaufschlagung aus dem Innenraum erreicht werden. Die Winkel der Kegelstumpfmantelflächen relativ zur abzudichtenden Oberfläche sind dadurch während der gesamten Gebrauchsdauer des Dichtrings gleichbleibend stabil.

Eine derartige zentralisierte Anordnung der Kontaktfläche, bei der die Anteile an Kontaktfläche, die zum Außenraum und zum Innenraum hin angeordnet sind, ausgewogen bzw. nahezu gleichgroß ausgebildet sind, kann durch einen ersten Winkel in Einbaulage von 23 - 40° erreicht werden. Die Ausgestaltung der Kontaktfläche lässt sich zudem verbessern durch einen ersten Winkel von 28 - 35°.

Diese Ausgestaltung der Kontaktfläche lässt sich unterstützen durch eine dementsprechende Ausbildung eines zweiten Winkels, der zwischen der zweiten Kegelstumpfmantelfläche und der Welle in Einbaulage angeordnet ist. Dieser zweite Winkel kann 37 - 57°, bevorzugt 42 - 52° betragen. Durch eine derartige Ausgestaltung des zweiten Winkels lässt sich ebenfalls die Breite der Kontaktfläche minimieren und die Anteile der Kontaktfläche im Außenraum und Innenraum ausgewogen gestalten.

Derartig vorteilhafte erste und zweite Winkel in Einbaulage des Dichtringes mit der Welle können bei der Montage dadurch unterstützend ausgebildet werden, dass der erste und der zweite Winkel im unverbauten Zustand einen dementsprechenden, voreingestellten Wert aufweisen.
So kann der erste Winkel im unverbauten Zustand einen Wert von 37 - 50°, bevorzugt von 42 - 45° aufweisen. Der zweite Winkel kann im unverbauten Zustand einen Wert von 30 - 45°, und bevorzugt von 35 - 40° aufweisen.

Mit derartigen voreingestellten ersten und zweiten Winkeln im unverbauten Zustand des Dichtringes, können die vorteilhaften ersten und zweiten Winkel in Einbaulage des Dichtringes mit der Welle, nach der Montage der Welle in den Dichtring, dargestellt werden.

Zudem kann der Dichtring eine im Außenraum angeordnete und/oder zum Außenraum hin orientiert angeordnete zusätzliche Dichtlippe aufweisen. Vorteilhaft kann durch diese zusätzliche Dichtlippe ein Eintrag von Material von dem Außenraum in den Innenraum weiter verringert bzw. verhindert und somit einer Verschmutzung des Innenraums entgegengewirkt werden.

Zwischen der Dichtlippe und der zusätzlichen Dichtlippe kann zudem ein Zwischenraum angeordnet sein. Dieser Zwischenraum wird durch die Dichtlippen begrenzt und durch beide Dichtlippen abgedichtet. In diesem Zwischenraum kann in Einbaulage mit der Welle ein Schmiermittel eingebracht sein, wie zum Beispiel Fett, Öl, Graphit, Teflon oder dergleichen. Somit kann vorteilhaft der zwischen den beiden Dichtlippen angeordnete Zwischenraum als Schmiermittelreservoir dienen.

Des Weiteren kann der Dichtring einen ringförmigen, tragenden Stützkörper aufweisen. Dieser ringförmige tragende Stützkörper kann aus Metall oder aus einem anderen temperaturbeständigen und verformungsstabilen Material hergestellt sein. Im Wesentlichen kann dieser ringförmige, tragende Stützkörper als eine Hülse ausgebildet sein.

Mittels dieses ringförmigen, tragenden Stützkörpers kann der Dichtring insgesamt stabilisiert und versteift werden. Dadurch ist die Handhabbarkeit, insbesondere bei der Montage, vereinfacht. Zudem wird durch den ringförmigen, tragenden Stützkörper im Wesentlichen die äußere Form und Dimension des Dichtringes vorgegeben. Der Dichtring kann Dauer haltbar in seinen Einbauraum in einem Gehäuse eingebaut werden.

Des Weiteren kann der Dichtring einen hohlzylinderförmigen Abschnitt aufweisen, an dem die Dichtlippe derart angebunden ist, dass eine Innenmantelfläche des hohlzylinderförmigen Abschnitts in die erste Kegelstumpfmantelfläche übergeht.

Die erste Kegelstumpfmantelfläche, die direkt in die Innenmantelfläche des hohlzylinderförmigen Abschnitts übergeht, kann knickfrei ausgebildet sein. Aufgrund des Fehlens von Diskontinuitäten bzw. Knickstellen in der ersten Kegelstumpfmantelfläche kann ein Umklappen oder Umknicken der Dichtlippe beim Einbau der Welle in den Dichtring vermieden bzw. verhindert werden.

Des Weiteren kann der ringförmige, tragende Stützkörper über einen Hohlzylinderförmigen Abschnitt mit der zusätzlichen Dichtlippe verbunden sein. Demzufolge lässt sich der zwischen den beiden Dichtlippen angeordnete, Zwischenraum durch den hohlzylinderförmigen Abschnitt ausgestalten, so dass ein dementsprechend gewünschtes Volumen zum Beispiel für ein Schmiermittelreservoir optimiert werden kann.

Die Dichtlippe, sowie die zusätzliche Dichtlippe als auch der hohlzylinderförmige Abschnitt können aus einem gleichen oder aus unterschiedlichen Materialien ausgebildet sein. Alle zuvor aufgeführten Bauteile können aus einem Material mit gleicher oder unterschiedlicher Elastizität ausgebildet sein. Die vorgenannten Bauteile können in beliebiger Kombination aus einem gleichen Material oder einem unterschiedlichen Material sowie aus einem Material gleicher Elastizität bzw. unterschiedlicher Elastizität ausgebildet sein. Die vorgenannten Bauteile können in unterschiedlicher Kombination zueinander integral oder mehrteilig ausgebildet sein. So können sie aus unterschiedlichen oder gleichen Materialien aneinander angespritzt sein oder einen weiteren Stützkörper zur Stabilisierung aufweisen, auf den ein elastisches

Material aufgespritzt ist. Der hohlzylinderförmige Abschnitt kann an den ringförmigen, tragenden Stützkörper angespritzt oder anderweitig mit demselben verbunden sein.

In einem weiteren Aspekt der Erfindung wird ein Gehäuse mit einem wie zuvor beschriebenen Dichtring vorgeschlagen. Ein derartiges Gehäuse weist eine robustere und unempfindlichere Abdichtung mit geringerem Verschleiß während des Betriebes auf, auch dann, wenn der zur Anwendung gelangende Dichtring während seiner bestimmungsgemäßen Verwendung, angepasst an den abzudichtenden Wellendurchmesser, nur einen Innendurchmesser von 3-15 mm aufweist.

### Kurzbeschreibung der Figuren

### Es zeigt, jeweils schematisch:

- Fig. 1: eine Dichtungsanordnung mit einem Dichtring in unverbautem Zustand,
- Fig. 2: die Dichtungsanordnung mit dem Dichtring in Einbaulage mit einer Welle.

### Ausführung der Erfindung

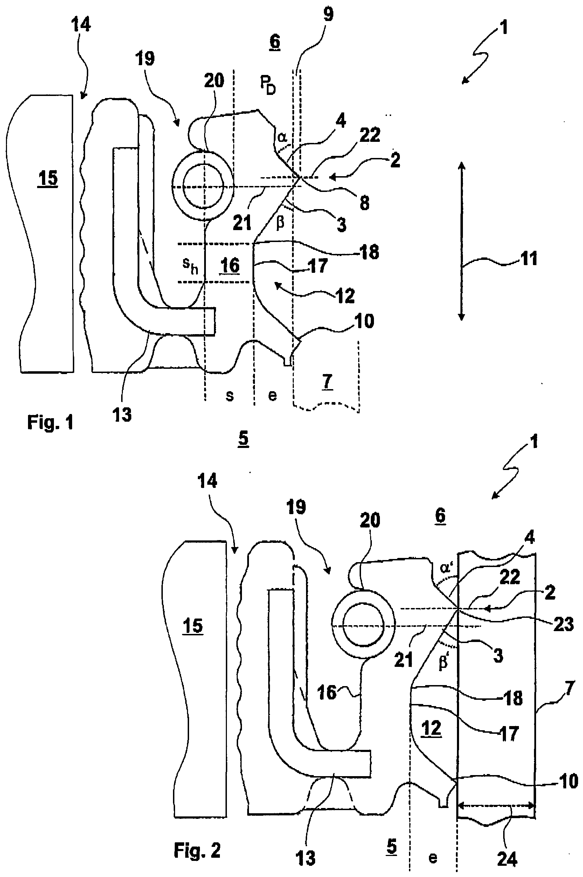

In Fig. 1 ist eine Dichtungsanordnung mit einem Dichtring 1 in unverbautem Zustand dargestellt. Dieser Dichtring 1 ist mit einer Dichtlippe 2 ausgestattet, die durch eine erste Kegelstumpfmantelfläche 3 und eine zweite Kegelstumpfmantelfläche 4 begrenzt wird. Die erste Kegelstumpfmantelfläche 3 ist zu einem Außenraum 5 hin orientiert und die zweite Kegelstumpfmantelfläche 4 ist zu einem Innenraum 6 hin orientiert. Da ein derartiger Dichtring 1 zur Abdichtung zum Beispiel einer Welle 7, die eine Gehäuseöffnung durchdringt, verwendet werden kann, kann der Innenraum 6 einen Gehäuseinnenraum darstellen, während der Außenraum 5 das Gehäuse umgibt.

In dem dargestellten unverbauten Zustand ist ebenfalls die nachträglich einzuführende Welle 7 dargestellt, um eine Überdeckung 9 der Dichtlippe 2 zu illustrieren. Zwischen der ersten Kegelstumpfmantelfläche 3 und der nachträglich einzuführenden Welle 7 ist ein erster Winkel β angeordnet und zwischen der zweiten Kegelstumpfmantelfläche 4 und der nachträglich einzuführenden Welle 7 ein zweiter Winkel α.

Des Weiteren ist der Dichtring 1 mit einer zusätzlichen Dichtlippe 10 ausgestattet, die in axialer Richtung 11 zum Außenraum 5 hin orientiert ist. Zwischen den beiden Dichtlippen 2, 10 ist ein Zwischenraum 12 angeordnet Durch die beiden Dichtlippen 2, 10 wird der Zwischenraum 12 dicht gegenüber dem Außenraum 5 und/oder gegenüber dem Innenraum 6 verschlossen.

Auch ist der Dichtring 1 mit einem ringförmigen, tragenden Stützkörper 13 ausgestattet, der zur Stabilisierung, Versteifung und zur Ausbildung der äußeren Form des Dichtringes 1 dient. Aufgrund der komplementären Ausbildung der äußeren Form des Dichtringes 1 ist eine einfache Einsetzbarkeit des Dichtringes 1 in eine Gehäuseöffnung 14 eines Gehäuses 15 ermöglicht. Des Weiteren weist der Dichtring 1 einen hohlzylinderförmigen Abschnitt 16 auf, an den die Dichtlippe 2 derart angebunden ist, dass eine Innenmantelfläche 17 des hohlzylinderförmigen Abschnittes 16 ohne sprunghafte Richtungsänderungen in die erste Kegelstumpfmantelfläche 3 übergeht. Die erste Kegelstumpfmantelfläche 3, die sich von der Anbindungsstelle 18 der Innenmantelfläche 17 an die erste Kegelstumpfmantelfläche 3 bis zur Kontaktkante 8 erstreckt, ist knickfrei ausgebildet.

Der hohlzylinderförmige Abschnitt 16 ist an den ringförmigen, tragenden Stützkörper 13 angebunden und mit der zusätzlichen Dichtlippe 10 sowie der Dichtlippe 2 verbunden. Zudem weist der Dichtring 1 auf der der Dichtlippe 2 radial abgewandten Seite ein ringförmiges Spannelement 20 auf, mit dem die Dichtlippe 2 in Einbaulage an die Welle 7 angepresst wird. Dabei ist eine Wirkebene 21 einer radialen Kraftwirkung des Spannelementes 20 gegenüber einer durch die kreisförmige Kontaktkante 8 aufgespannten Kontaktebene 22 in axialer Richtung 11 zum Außenraum 5 hin verschoben.

In Fig. 1 sind zudem weitere Parameter P_{D}, s, sₕ, e der Dichtlippe 1 im unverbauten Zustand angegeben, die in dem folgenden Ausführungsbeispiel näher spezifiziert sind.

### Ausführungsbeispiel:

| Variation der Maße einer möglichen Ausführungsform wie in Fig. 1 gezeigt | | |
|---|---|---|
| Parameter | Vorteilhafte Wertebereiche | Bevorzugte Wertebereiche |
| P_{D} | 0,8-1,6mm | 1,1-1,3 mm |
| s | 0,6-1,2 mm | 0,8-1,0 mm |
| sₕ | 0,4-1,1 mm | 0,6-0,9 mm |
| e | 0,4-1,0 mm | 0,6-0,8 mm |
| α | 30-45° | 35-40° |
| β | 37-50° | 42-45° |

In der in Fig. 1 gezeigten Ausführungsform sind sämtliche Kombinationen oben aufgeführter Werte für die Parameter zulässig und anwendbar.

In Figur 2 ist der Dichtring 1 aus Figur 1 in Einbaulage zur Welle 7 dargestellt. Dabei ist der erste Winkel β' und der zweite Winkel α' in Einbaulage ein anderer als der erste Winkel β und der zweite Winkel α in unverbautem Zustand. Zudem bildet sich bei der Montage der Welle 7 eine Kontaktfläche 23 aus.

In Einbaulage entspricht der Innendurchmesser 24 der Kontaktfläche 23 dem abzudichtenden Durchmesser der Welle 7. Ebenso nimmt die Wirkebene 21 in Einbaulage eine andere Position zur Kontaktebene 22 ein, als im unverbauten Zustand.

## Patentansprüche

1. Dichtungsanordnung, umfassend einen Dichtring, insbesondere Radialwellendichtring, zum dichtenden Abtrennen eines eine Welle (7) jeweils zumindest teilweise umgebenden Innenraums (6) von einem Außenraum (5) mit einer durch eine erste und eine zweite Kegelstumpfmantelfläche (3, 4) begrenzten Dichtlippe (2), die außenumfangsseitig von einem Spannelement (20) umschlossen ist, mit dem die Dichtlippe (2) in Einbaulage an die Welle (7) anpressbar ist, wobei in einer axialen Richtung (11) die erste Kegelstumpfmantelfläche (3) zum Außenraum (5) und die zweite Kegelstumpfmantelfläche (4) zum Innenraum (6) hin orientiert ist, wobei die Kegelstumpfmantelflächen (3, 4) in Einbaulage über eine an der Welle (7) anliegende, ringförmige Kontaktfläche (23) der Dichtlippe (2) miteinander verbunden sind, daduch gekennzeichnet, dass die Kontaktfläche (23) im unverbauten Zustand des Dichtrings eine Überdeckung (9) bezogen auf die Oberfläche der abzudichtenden Welle (7) aufweist, wobei der erste (β') und der zweite Winkel (α') in Einbaulage im Wesentlichen gleich groß ausgebildet sind, wobei die erste Kegelstumpfmantelfläche (3) mit der Welle (7) in Einbaulage einen ersten Winkel (β') von 23 - 40° einschließt, wobei ein Innendurchmesser (24) der an der Welle (7) anliegenden, ringförmigen Kontaktfläche (23) in Einbaulage 1-15 mm beträgt, abhängig vom Durchmesser der jeweiligen abzudichtenden Welle (7).

2. Dichtungsanordnung nach Anspruch 1, **dadurch gekennzeichnet, dass** der erste Winkel (β`) in Einbaulage 28-35° beträgt.

3. Dichtungsanordnung nach einem der vorhergehenden Ansprüche, **dadurch gekennzeichnet, dass**
die zweite Kegelstumpfmantelfläche (4) mit der Welle (7) in Einbaulage einen zweiten Winkel (α') von 37-57° einschließt.

4. Dichtungsanordnung nach einem der vorhergehenden Ansprüche, **dadurch gekennzeichnet, dass** der erste Winkel (β) in unverbautem Zustand 37-50° beträgt.

5. Dichtungsanordnung nach Anspruch 3, **dadurch gekennzeichnet, dass** der zweite Winkel (α) in unverbautem Zustand 30-45° beträgt.

6. Dichtungsanordnung nach einem der vorhergehenden Ansprüche, **dadurch gekennzeichnet, dass** der Dichtring (2) eine im Außenraum (5) angeordnete zusätzliche Dichtlippe (10) aufweist.

7. Dichtungsanordnung nach Anspruch 6, **dadurch gekennzeichnet, dass** zwischen der Dichtlippe (2) und der zusätzlichen Dichtlippe (10) ein Zwischenraum (12) angeordnet ist.

8. Dichtungsanordnung nach einem der vorhergehenden Ansprüche, **dadurch gekennzeichnet, dass** der Dichtring (1) einen ringförmigen, tragenden Stützkörper (13) aufweist.

9. Dichtungsanordnung nach einem der vorhergehenden Ansprüche, **dadurch gekennzeichnet, dass** der Dichtring (1) einen hohlzylinderförmigen Abschnitt (16) aufweist, an dem die Dichtlippe (2) derart angebunden ist, dass eine Innenmantelfläche (17) des hohlzylinderförmigen Abschnitts (16) in die erste Kegelstumpfmantelfläche (3) übergeht.

10. Dichtungsanordnung nach einem der vorhergehenden Ansprüche, **dadurch gekennzeichnet, dass** die erste Kegelstumpfmantelfläche (3) knickfrei ausgebildet ist.

11. Dichtungsanordnung nach einem der Ansprüche 9 oder 10, **dadurch gekennzeichnet, dass** der ringförmige, tragende Stützkörper (13) über einen hohlzylinderförmigen Abschnitt (16) mit der zusätzlichen Dichtlippe (10) verbunden ist.

12. Dichtungsanordnung nach einem der Ansprüche 1 bis 11, **dadurch gekennzeichnet, dass** eine Wirkebene (21) einer radialen Kraftwirkung des Spannelementes (20) gegenüber einer Kontaktebene (22) die Dichtlippe (2) axial in Richtung des Außenraums (5) verschoben ist.

13. Dichtungsanordnung nach einem der Ansprüche 1 bis 12, **dadurch gekennzeichnet, dass** das Spannelement (20) als Ringwendelfeder ausgebildet ist.

14. Dichtungsanordnung nach einem der vorhergehenden Ansprüche, **dadurch gekennzeichnet, dass** die Dichtlippe (2) einen Rückförderdrall aufweist.

15. Gehäuse mit einem Dichtring (1) nach einem der vorhergehenden Ansprüche.

## Claims

1. Sealing arrangement comprising a sealing ring, in particular a radial shaft sealing ring, for sealing off an internal space (6), which in each case at least partially surrounds a shaft (7), from an external space (5) having a sealing lip (2) bounded by a first and a second frustoconical lateral surface (3, 4), said sealing lip (2) being enclosed at its outer circumference by a tensioning element (20) by way of which the sealing lip (2) can be pressed against the shaft (7) in the installed position, wherein the first frustoconical lateral surface (3) is oriented in the axial direction (11) towards the external space (5) and the second frustoconical lateral surface (4) is oriented in the axial direction (11) towards the internal space (6), wherein the frustoconical lateral surfaces (3, 4) are connected together in the installed position via an annular contact surface (23), which butts against the shaft (7), of the sealing lip (2), **characterized in that**, in the uninstalled state of the sealing ring, the contact surface (23) has an overlap (9) with regard to the surface of the shaft (7) to be sealed off, wherein the first (β') and the second (α') angle are configured to be substantially the same size in the installed position, wherein the first frustoconical lateral surface (3) encloses a first angle (β') of 23-40° with the shaft (7) in the installed position, wherein an inside diameter (24) of the annular contact surface (23) butting against the shaft (7) is 1-15 mm in the installed position, depending on the diameter of the respective shaft (7) to be sealed.

2. Sealing arrangement according to Claim 1, **characterized in that** the first angle (β') is 28-35° in the installed position.

3. Sealing arrangement according to either of the preceding claims, **characterized in that** the second frustoconical lateral surface (4) encloses a second angle (α') of 37-57° with the shaft (7) in the installed position.

4. Sealing arrangement according to one of the preceding claims, **characterized in that** the first angle (β) is 37-50° in the uninstalled state.

5. Sealing arrangement according to Claim 3, **characterized in that** the second angle (α) is 30-45° in the uninstalled state.

6. Sealing arrangement according to one of the preceding claims, **characterized in that** the sealing ring (2) has an additional sealing lip (10) arranged in the external space (5).

7. Sealing arrangement according to Claim 6, **characterized in that** an intermediate space (12) is arranged between the sealing lip (2) and the additional sealing lip (10).

8. Sealing arrangement according to one of the preceding claims, **characterized in that** the sealing ring (1) has an annular supporting body (13).

9. Sealing arrangement according to one of the preceding claims, **characterized in that** the sealing ring (1) has a hollow-cylindrical portion (16) to which the sealing lip (2) is attached such that an inner lateral surface (17) of the hollow-cylindrical portion (16) merges into the first frustoconical lateral surface (3).

10. Sealing arrangement according to one of the preceding claims, **characterized in that** the first frustoconical lateral surface (3) is formed in a kink-free manner.

11. Sealing arrangement according to either of Claims 9 and 10, **characterized in that** the annular supporting body (13) is connected to the additional sealing lip (10) via a hollow-cylindrical portion (16).

12. Sealing arrangement according to one of Claims 1 to 11, **characterized in that** a plane of action (21) of a radial force of the tensioning element (20) is displaced axially towards the external space (5) with respect to a contact plane (22) of the sealing lip (2).

13. Sealing arrangement according to one of Claims 1 to 12, **characterized in that** the tensioning element (20) is formed as an annular coil spring.

14. Sealing arrangement according to one of the preceding claims, **characterized in that** the sealing lip (2) has a return helix.

15. Housing having a sealing arrangement (1) according to one of the preceding claims.

## Revendications

1. Ensemble d'étanchéité comprenant une bague d'étanchéité et en particulier une bague d'étanchéité radiale d'arbre, pour séparer de manière hermétique un espace intérieur (6) entouré au moins en partie par un arbre (7) d'un espace extérieur (5), l'ensemble présentant une lèvre d'étanchéité (2) délimitée par une première et une deuxième surface tronconique d'enveloppe (3, 4) et entourée à sa périphérie extérieure par un élément de serrage (20) par lequel la lèvre d'étanchéité (2) peut être repoussée contre l'arbre (7) lorsqu'elle est en position montée,
la première surface tronconique d'enveloppe (3) étant orientée dans une direction axiale (11) vers l'espace extérieur (5) et la deuxième surface tronconique (4) étant orientée vers l'espace intérieur (6), les surfaces tronconiques d'enveloppe (3, 4) étant reliées l'une à l'autre lorsqu'elles sont en position de montage par l'intermédiaire d'une surface annulaire de contact (23) de la lèvre d'étanchéité (2) placée sur l'arbre (7),
**caractérisé en ce que**
lorsque la bague d'étanchéité n'est pas démontée, la surface de contact (23) présente un recouvrement (9) de la surface de l'arbre (7) à rendre étanche,
**en ce que** le premier angle (β') et le deuxième angle (α') ont essentiellement la même valeur en position montée, la première surface tronconique d'enveloppe (3) formant avec l'arbre (7) un premier angle (β') de 23 à 40° en position montée et
**en ce que** selon le diamètre de l'arbre (7) particulier qui doit être rendu étanche, le diamètre intérieur (24) de la surface annulaire (23) de contact avec l'arbre (7) est de 1 à 15 mm en position montée.

2. Ensemble d'étanchéité selon la revendication 1, **caractérisé en ce qu'**en position montée, le premier angle (β') est de 28 à 35°.

3. Ensemble d'étanchéité selon l'une des revendications précédentes, **caractérisé en ce qu'**en position montée, la deuxième surface tronconique d'enveloppe (4) forme avec l'arbre (7) un deuxième angle (α') de 37 à 57°.

4. Ensemble d'étanchéité selon l'une des revendications précédentes, **caractérisé en ce qu'**en position non démontée, le premier angle (β) est de 37 à 50°.

5. Ensemble d'étanchéité selon la revendication 3, **caractérisé en ce qu'**en position non démontée, le deuxième angle (α) est de 30 à 45°.

6. Ensemble d'étanchéité selon l'une des revendications précédentes, **caractérisé en ce que** la bague d'étanchéité (2) présente une lèvre d'étanchéité supplémentaire (10) disposée dans l'espace extérieur (5).

7. Ensemble d'étanchéité selon la revendication 6, **caractérisé en ce qu'**un espace intermédiaire (12) est disposé entre la lèvre d'étanchéité (2) et la lèvre d'étanchéité supplémentaire (10).

8. Ensemble d'étanchéité selon l'une des revendications précédentes, **caractérisé en ce que** la bague d'étanchéité (1) présente un corps porteur
annulaire de soutien (13).

9. Ensemble d'étanchéité selon l'une des revendications précédentes, **caractérisé en ce que** la bague d'étanchéité (1) présente une section (16) en forme de cylindre creux à laquelle la lèvre d'étanchéité (2) est reliée de telle sorte qu'une surface d'enveloppe intérieure (17) de la section (16) en forme de cylindre creux se prolonge en la première surface tronconique d'enveloppe (3).

10. Ensemble d'étanchéité selon l'une des revendications précédentes, **caractérisé en ce que** la première surface tronconique d'enveloppe (3) ne présente pas de coude.

11. Ensemble d'étanchéité selon l'une des revendications 9 ou 10, **caractérisé en ce que** le corps porteur annulaire (13) est relié à la lèvre d'étanchéité supplémentaire (10) par l'intermédiaire d'une section (16) en forme de cylindre creux.

12. Ensemble d'étanchéité selon l'une des revendications 1 à 11, **caractérisé en ce qu'**un plan d'action (21) d'une force radiale de l'élément de serrage (20) est décalé axialement dans la direction de l'espace extérieur (5) par rapport à un plan de contact (22) de la lèvre d'étanchéité (2).

13. Ensemble d'étanchéité selon l'une des revendications 1 à 12, **caractérisé en ce que** l'élément de serrage (20) est configuré comme ressort spiralé annulaire.

14. Ensemble d'étanchéité selon l'une des revendications précédentes, **caractérisé en ce que** la lèvre d'étanchéité (2) présente une torsion anti-retour.

15. Boîtier doté d'une bague d'étanchéité (1) selon l'une des revendications précédentes.
